# EUROPEAN PATENT APPLICATION

(11) **EP 4 807 579 A1**
(43) Date of publication of application: **16.09.2026**
(21) Application number: 24899384.2
(22) Date of filing: 06.09.2024
(51) Int. Cl.: G06F 16/2455

(54) **DATA QUERY METHOD, ACCELERATION APPARATUS, COMPUTING DEVICE AND STORAGE MEDIUM**

(30) Priority: 07.12.2023 CN 202311680630
(71) Applicant: Huawei Technologies Co., Ltd., Shenzhen, Guangdong 518129 (CN)
(72) Inventor: LIU, Changfeng, Shenzhen, Guangdong 518129 (CN); QUE, Mingjian, Shenzhen, Guangdong 518129 (CN)
(74) Representative: Isarpatent
(86) International application number: PCT/CN2024/117309
(87) International publication number: WO 2025/118738

(57) **Abstract**

This application discloses a data query method, an acceleration apparatus, a compute device, and a storage medium, and relates to the field of database technologies. The method is applied to an acceleration apparatus of a compute device. The method includes: performing vectorized execution on a data query request, and generating a vector dictionary and a vector index based on a fact table, a dimension table, and a join key that are indicated by the data query request, to implement multi-table join query. In this way, because the vector dictionary and the vector index are small in sizes, excessive storage space is not occupied. In addition, an entire process is performed by a hardware acceleration apparatus, so that computational power of a processor in the compute device is offloaded. This improves overall query performance.

## Description

This application claims priority to Chinese Patent Application No. 202311680630.3, filed on December 7, 2023 and entitled "DATA QUERY METHOD, ACCELERATION APPARATUS, COMPUTE DEVICE, AND STORAGE MEDIUM", which is incorporated herein by reference in its entirety.

### TECHNICAL FIELD

This application relates to the field of database technologies, and in particular, to a data query method, an acceleration apparatus, a compute device, and a storage medium.

### BACKGROUND

In the field of database technologies, a star or snowflake architecture is employed for data storage, so that database storage space can be reserved effectively. To be specific, a large amount of factual data is stored in a fact table, while dimension information for the factual data is stored in a dimension table. An association relationship between the fact table and the dimension table is established by using a foreign key of the fact table and a primary key of the dimension table. During service analysis, a data query request may be used to join the dimension table and the fact table, aggregating data in the dimension table and data in the fact table to provide corresponding information for a user. For example, the data query request specifies to aggregate sales in the fact table based on two pieces of dimension information: year and customer region.

In related technologies, in the star or snowflake architecture, the data query request typically specifies a join key, which is used to determine which row in the dimension table is to be aggregated with a specified row in the fact table. Currently, a hash join (Hash Join) algorithm is commonly employed to execute such a data query request. For example, a table with a smaller data amount in the two tables is selected, a hash table is constructed in memory based on a join key of the table, and then the other table is traversed based on each hash value in the hash table, to locate rows with a same join key value. These rows are merged to obtain a data query result.

However, in the foregoing method, constructing the hash table occupies large memory space, and a processor needs to frequently access the hash table in the memory, resulting in low data query efficiency and degrading overall database performance.

### SUMMARY

Embodiments of this application provide a data query method, an acceleration apparatus, a compute device, and a storage medium, to improve data query efficiency.

According to a first aspect, this application provides a data query method, applied to an acceleration apparatus of a compute device, and the method includes:
obtaining a query vector of a data query request, where the data query request indicates to query data from a fact table and at least one dimension table based on a join key, at least one foreign key of the fact table is associated with a primary key of the at least one dimension table, and the at least one dimension table is used to store dimension information of factual data in the fact table;
generating a vector dictionary of each dimension table based on the query vector and a vector corresponding to the at least one dimension table, where the vector dictionary of the dimension table includes a join key value that is of the join key and that is related to the query vector in the dimension table;
traversing the at least one dimension table based on the at least one foreign key of the fact table, the primary key of the at least one dimension table, and the vector dictionary of each dimension table, to generate a vector index, where the vector index includes a fact table identifier in the fact table for the join key value; and
querying the fact table based on the vector index, to obtain a data query result.

According to the foregoing method, vectorized execution is performed on the data query request, and a vector dictionary and a vector index are generated based on a fact table, a dimension table, and a join key that are indicated by the data query request, to implement multi-table join query. In this way, because sizes of the vector dictionary and the vector index are small, not too much storage space is occupied. In addition, an entire process is performed by a hardware acceleration apparatus, so that computational power of a processor in the compute device is offloaded. This improves overall query performance.

In some embodiments, the at least one dimension table is stored in the acceleration apparatus.

In some embodiments, the method further includes at least one of the following:
storing the vector dictionary of each dimension table in the acceleration apparatus; and
storing the vector index in the acceleration apparatus.

In some embodiments, generating the vector dictionary of each dimension table based on the query vector and the vector corresponding to the at least one dimension table includes:
determining, based on first dimension information indicated by the query vector, a first join key value related to the first dimension information from a first dimension table in which the first dimension information is located; and
generating a vector dictionary of the first dimension table based on the first join key value.

In some embodiments, traversing the at least one dimension table based on the at least one foreign key of the fact table, the primary key of the at least one dimension table, and the vector dictionary of each dimension table, to generate the vector index includes:
generating a join table of each dimension table based on the at least one foreign key of the fact table, the primary key of the at least one dimension table, and the vector dictionary of each dimension table, where the join table of the dimension table includes the join key value in the dimension table and the fact table identifier in the fact table for the join key value; and
generating the vector index based on a same fact table identifier in the join table of each dimension table.

In some embodiments, generating the join table of each dimension table based on the at least one foreign key of the fact table, the primary key of the at least one dimension table, and the vector dictionary of each dimension table includes:
traversing the first dimension table based on the vector dictionary of the first dimension table and a first primary key of the first dimension table, to determine a first primary key value corresponding to the first join key value in the first dimension table, where the first join key value is a join key value determined from the first dimension table based on the first dimension information indicated by the query vector;
determining a first fact table identifier in the fact table for the first join key value based on the first primary key value and a first foreign key, of the fact table, that is associated with the first primary key; and
generating a join table of the first dimension table based on the first join key value and the first fact table identifier in the fact table for the first join key value.

In some embodiments, querying the fact table based on the vector index, to obtain the data query result includes:
querying, based on the vector index, a column in which the join key is located in the fact table, to obtain the data query result.

In some embodiments, the data query request indicates to query data from the fact table and the at least one dimension table based on the join key and a measure key; and querying the fact table based on the vector index, to obtain the data query result includes:
querying, based on the vector index, a column in which the join key is located and a column in which the measure key is located in the fact table, to obtain the data query result.

In some embodiments, the data query request indicates to query data from the fact table and the at least one dimension table based on the join key and a group key, and the method further includes:
generating a group code based on the group key, and mapping the group code to a subscript of a one-dimensional array corresponding to the group key in the data query result.

In some embodiments, the acceleration apparatus is at least one of a system on chip SOC, a field-programmable gate array FPGA, a graphics processing unit GPU, an application-specific integrated circuit ASIC, an artificial intelligence AI chip, or a data processing unit DPU.

According to a second aspect, this application provides an acceleration apparatus, configured in a compute device, where the acceleration apparatus includes a processing unit and a storage unit, the processing unit is configured to perform the data query method provided in the first aspect or any optional manner of the first aspect, and the storage unit is configured to provide storage space for the acceleration apparatus.

According to a third aspect, this application provides a compute device, where the compute device includes a host and an acceleration apparatus, the host is configured to send a data query request to the acceleration apparatus, and the acceleration apparatus is configured to receive the data query request and implement the data query method provided in the first aspect or any optional manner of the first aspect.

According to a fourth aspect, this application provides a computer-readable storage medium, where the computer-readable storage medium is configured to store at least one segment of program code, and the at least one segment of program code is used to perform the data query method provided in the first aspect or any optional manner of the first aspect. The storage medium includes but is not limited to a volatile memory, for example, a random access memory, or a nonvolatile memory, for example, a flash memory, a hard disk drive (hard disk drive, HDD), or a solid-state drive (solid-state drive, SSD).

According to a fifth aspect, this application provides a computer program product. When the computer program product is run on an acceleration apparatus of a compute device, the acceleration apparatus is enabled to perform the data query method provided in the first aspect or any optional manner of the first aspect. The computer program product may be a software installation package. When a function of the acceleration apparatus needs to be implemented, the computer program product may be downloaded, and the computer program product may be executed on the acceleration apparatus.

### BRIEF DESCRIPTION OF DRAWINGS

FIG. 1 is a diagram of an implementation environment according to an embodiment of this application;
FIG. 2 is a diagram of a hardware structure of an acceleration apparatus according to an embodiment of this application;
FIG. 3 is a diagram of execution logic of an acceleration apparatus according to an embodiment of this application;
FIG. 4 is a flowchart of a data query method according to an embodiment of this application;
FIG. 5 is a diagram of generating a vector dictionary according to an embodiment of this application;
FIG. 6 is a diagram of generating a vector index according to an embodiment of this application;
FIG. 7 is a diagram of querying a fact table based on a vector index according to an embodiment of this application;
FIG. 8 is a diagram of another data query method according to an embodiment of this application;
FIG. 9 is a diagram of vectorized execution of a data query method according to an embodiment of this application;
FIG. 10 is a diagram of experimental effect comparison according to an embodiment of this application; and
FIG. 11 is a diagram of another data query method according to an embodiment of this application.

### DESCRIPTION OF EMBODIMENTS

To make objectives, technical solutions, and advantages of this application clearer, the following further describes implementations of this application in detail with reference to the accompanying drawings. It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, a fact table, a dimension table, and the like in this application are all obtained under sufficient authorization.

**For ease of understanding, the following first describes key terms and key concepts in this application.**

A fact table (fact table) is a table used to store service factual data. The fact table typically includes numeric data, such as sales, order quantity, and inventory, related to a business process. Each row in the fact table represents a specified service fact, and each column is a measure or indicator related to the fact. The fact table usually contains one or more foreign keys, which are used to establish an association relationship with a dimension table.

A dimension table (dimension table) is a table used to store context information about facts. The dimension table usually includes dimension information, such as time, location, product, and customer, related to the factual data in the fact table. Each row in the dimension table represents one dimension value, and each column represents an attribute related to the dimension. The dimension table usually contains one primary key, which is used to establish an association relationship with the fact table.

A star join is a multi-dimensional data join architecture that includes one fact table and at least one dimension table. The fact table is a core. Each dimension table has a dimension as a primary key. Primary keys of all these dimensions are combined into a primary key of the fact table. After data is organized in this manner, aggregation processing, for example, summing (summary), averaging (average), counting (count), and percentage calculation (percent), can be performed on factual data in the fact table based on different dimensions (a part or all of the primary key of the fact table).

A snowflake join is a multi-dimensional data join architecture that includes one fact table and at least one dimension table. There is one or more dimension tables that are not directly joined to the fact table, but are joined to the fact table through another dimension table.

An operator (operator, OP) is a compute unit or a compute function running on a compute device.

**The following describes an application scenario and an implementation environment in this application.**

The technical solutions provided in embodiments of this application can be applied to data analysis scenarios such as a database and big data, for example, a data query scenario involving an operator, such as multi-table join or multi-table aggregation, and can also be applied to a scenario involving a vector retrieval operation, such as storage, a network, or a cloud. It should be understood that, computer storage exhibits a pyramid structure, where top-layer space is small but offer higher processing speeds. A cache of a central processing unit (central processing unit, CPU) is a place where the CPU first obtains data. Similarly, multi-core processing also accelerates program execution. However, a thread synchronization mechanism needs to be introduced to resolve a data inconsistency problem caused by multi-threading. In related technologies, aligning software performance with underlying hardware constitutes a highly effective method for improving overall database performance. Currently, in-memory databases have been integrated with hardware-oriented algorithms. For example, the algorithms are divided into a hardware-oblivious (hardware-oblivious) algorithm and a hardware-conscious (hardware-conscious) algorithm. The former is applied to a non-partitioned hash join algorithm, and the latter is applied to a partitioned join algorithm. Different algorithms vary in sensitivity to a cache and a core quantity of a CPU. Compared with a hash join algorithm, a vector join (Vector Join) algorithm has improvement in both space and efficiency. Compared with hash join, vector join has great advantages in constructing a vector array and join querying. In view of this, this application provides a hardware acceleration apparatus supporting vector join, configured in a compute device, to accelerate execution processes of a multi-table join operator and a multi-table aggregation operator in data analysis scenarios such as a database and big data.

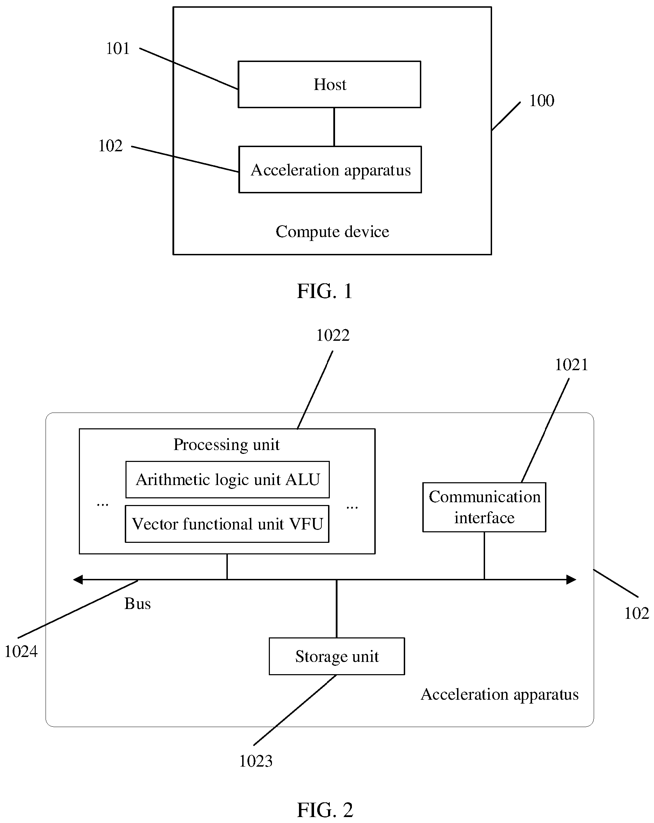

The following describes an implementation environment of this application with reference to FIG. 1.

FIG. 1 is a diagram of an implementation environment according to an embodiment of this application. As shown in FIG. 1, the implementation environment includes a compute device 100. The compute device 100 includes a host 101 and an acceleration apparatus 102. The host 101 and the acceleration apparatus 102 are communicatively connected.

The host 101 is a device configured to run a database, and can provide services such as data query and data analysis for a user. In this embodiment of this application, the host 101 can control the acceleration apparatus 102 to execute an operator such as multi-table join or multi-table aggregation for a data query request of the database. This process may also be understood as loading a data query task to the acceleration apparatus 102 for running. In addition, there may be one or more hosts 101. This is not limited in this application.

The acceleration apparatus 102 is configured to provide computational power for the database, to accelerate an execution process of a database operator, that is, to perform the data query method provided in this application. For example, the acceleration apparatus 102 is at least one of a system on chip (system on chip, SOC), a field-programmable gate array (field-programmable gate array, FPGA), a graphics processing unit (graphics processing unit, GPU), an application-specific integrated circuit (application-specific integrated circuit, ASIC), an artificial intelligence (artificial intelligence, AI) chip, or a data processing unit (data processing unit, DPU). This is not limited in this application. For example, the acceleration apparatus 102 queries corresponding data from a fact table and at least one dimension table based on a data query request sent by the host 101, to obtain a data query result, and returns the data query result to the host 101. In addition, there may be one or more acceleration apparatuses 102. This is not limited in this application.

For example, the host 101 is communicatively connected to the acceleration apparatus 102 through a peripheral component interconnect bus (peripheral component interconnect express, PCIe) link, and the host 101 exchanges data with the acceleration apparatus 102 through a PCIe link. The compute device 100 may be an independent physical server, or may be a server cluster or a distributed file system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform.

For example, the compute device 100 is a cloud server. The compute device may also be referred to as a cloud platform (that is, short for a cloud computing platform), is a service based on a hardware resource and a software resource, and provides computing, network, and storage capabilities. The cloud platform remotely processes and analyzes massive data by using a network "cloud" and returns the data to users, and features a large scale, distribution, virtualization, high availability, scalability, on-demand services, and security. The cloud platform can quickly provision and release configurable compute resources at low management costs or with low complexity of interaction between the users and a service provider.

In addition, the network includes but is not limited to any combination of a data center network (data center network), a storage area network (storage area network, SAN), a local area network (local area network, LAN), a metropolitan area network (metropolitan area network, MAN), a wide area network (wide area network, WAN), a mobile, wired, or wireless network, a private network, or a virtual private network. In some implementations, technologies and/or formats including a hypertext markup language (hypertext markup language, HTML), an extensible markup language (extensible markup language, XML), and the like are used to represent data exchanged through the network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can alternatively be used to replace or supplement the foregoing data communication technology.

**The following describes a structure of the acceleration apparatus 102.**

FIG. 2 is a diagram of a hardware structure of an acceleration apparatus according to an embodiment of this application. As shown in FIG. 2, the acceleration apparatus 102 includes a communication interface 1021, a processing unit 1022, a storage unit 1023, and a bus 1024. The communication interface 1021, the processing unit 1022, and the storage unit 1023 implement communication connections with each other through the bus 1024.

The communication interface 1021 is configured to provide a program instruction and/or data. The communication interface 1021 includes a PCIe communication interface, another general-purpose peripheral interface, and the like. This is not limited in this application. For example, when the acceleration apparatus 102 is used as an accelerator card of the host 101, data exchange is implemented between the acceleration apparatus 102 and the host 101 by using the PCIe communication interface. For another example, the acceleration apparatus 102 implements communication between the acceleration apparatus 102 and another device or a communication network by using a peripheral interface.

The processing unit 1022 is configured to perform the data query method provided in this application, and is, for example, a core (core), or referred to as a control unit (control unit, CU), of a central processing unit (central processing unit, CPU). This is not limited in this application. For example, the processing unit 1022 may also be understood as a vector control unit (also referred to as a VAQ_CTRL unit). In some embodiments, the processing unit 1022 includes an arithmetic logic unit (arithmetic logic unit, ALU), a vector functional unit (vector functional unit, VFU), and the like, and is configured to interact with the storage unit 1023. The processing unit 1022 is deployed to implement logic control over real database service scenarios, enabling convenient integration into a database operator execution flow and thereby minimizing software reconstructions.

The storage unit 1023 is configured to provide storage space for the acceleration apparatus 102. For example, the storage unit 1023 is an advanced scratch pad memory (advanced scratch pad memory, ASPM), a double data rate (double data rate, DDR) memory, a static random-access memory (static random-access memory, SRAM), or another type of dynamic storage device that can store information and an instruction. Alternatively, any other medium that can be used to carry or store expected program code in a form of an instruction or a data structure and that can be accessed by a computer may be included, but is not limited thereto. For example, the storage unit 1023 is an ASPM, and may be configured as single-ported, 16 KB in size, and with 8 banks (Banks). This is not limited in this application.

The bus 1024 may include a path for transmitting information between components (for example, the communication interface 1021, the processing unit 1022, and the storage unit 1023) of the acceleration apparatus 102.

It should be noted that FIG. 2 is merely a diagram of a hardware structure that can be configured as the acceleration apparatus 102 according to this application. In some embodiments, the acceleration apparatus 102 may further include another component to implement more functions. This application is not limited thereto.

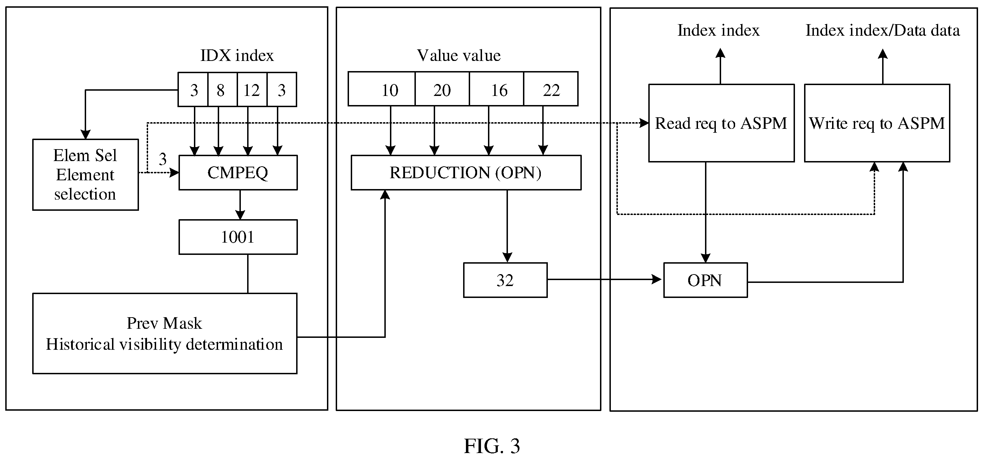

Refer to FIG. 3. The following describes hardware execution logic of the acceleration apparatus 102. FIG. 3 is a diagram of execution logic of an acceleration apparatus according to an embodiment of this application. As shown in FIG. 3, the processing unit 1022 (namely, a VAQ_CTRL unit) is configured to provide logic control for interacting with a service flow, and includes subunits such as DecoCtrl, DataReq, DataPack, and InstExec, where the DateReq subunit and the DataPack subunit are configured to interact with an ASPM storage unit to implement data request and obtain operations, and the InstExec subunit interacts with an arithmetic logic unit (ALU) to send data that needs to be calculated to the ALU for calculation through the ALU. The ALU is a combinational logic digital circuit that can perform an arithmetic or bitwise operation on a binary integer. In the content shown in FIG. 3, a sum (sum) operation for idx (index)=3 is used as an example. idx is input externally (that is, read req to ASPM), a bit 1001 that meets 3 is constructed from the index (CMPEQ in the figure is a SIMD comparison instruction), and is combined with a Value table to obtain 32 (REDUCTION in the figure is a SIMD reduction instruction, and OPN is a data block instruction), and 32 is written into the ASPM (that is, write req to ASPM). A Prev ( previous) phase may be understood as a historical visibility determining phase.

**The following describes the data query method provided in this application.**

It can be learned from the foregoing description that the technical solutions provided in embodiments of this application can be applied to data analysis scenarios such as a database and big data. A database service is used as an example. A user initiates a query by using a structured query statement (structured query language, SQL). Syntax and lexical parsing is performed on the SQL by the database, to generate an execution plan. The execution plan is optimized by using an optimizer, and then an execution phase is entered. In this case, execution is performed based on the optimized execution plan and an operator execution sequence. An acceleration-oriented scenario in this application involves operators for multi-table join and result aggregation, for example, an aggregate (aggregate) operator and a join (join) operator.

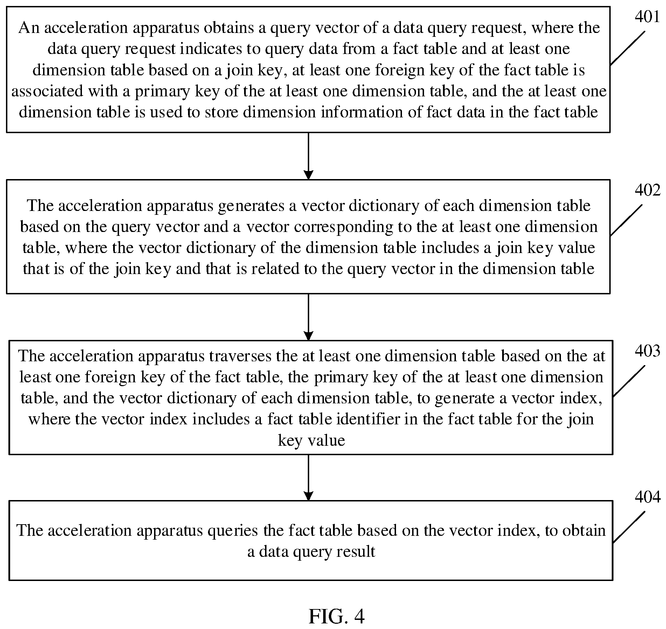

Refer to FIG. 4. The following describes a data query method provided in this application. FIG. 4 is a flowchart of a data query method according to an embodiment of this application. As shown in FIG. 4, the method is applied to an acceleration apparatus of a compute device, and includes the following step 401 to step 404.

**401: The acceleration apparatus obtains a query vector of a data query request, where the data query request indicates to query data from a fact table and at least one dimension table based on a join key, at least one foreign key of the fact table is associated with a primary key of the at least one dimension table, and the at least one dimension table is used to store dimension information of factual data in the fact table.**

In this embodiment of this application, the acceleration apparatus is communicatively connected to a host. The host sends the data query request to an optimizer in response to the data query request of a user. The optimizer maps the data query request to the query vector, and sends the query vector to the acceleration apparatus. In some embodiments, the acceleration apparatus may alternatively map the data query request to the query vector. This is not limited in this application. The data query request is converted for vectorized execution, so that overall performance can be effectively improved.

It can be learned from the foregoing descriptions of the fact table and the dimension table that the fact table includes at least one foreign key, each dimension table has one dimension as a primary key, and these primary keys are combined into a primary key of the fact table, that is, are associated with the at least one foreign key of the fact table. In addition, a quantity of dimension tables associated with the fact table is not limited in this application.

The following describes, based on an SSB (Star Schema Benchmark, star schema benchmark) and with reference to the following SQL, the foregoing data query request by using an example.

"SELECT c.nation, s.nation, d.year, sum (lo.revenue) as revenue
FROM customer AS c, lineorder AS lo, supplier AS s, dwdate AS d
WHERE lo.custkey=c.custkey
   AND lo.suppkey=s.suppkey
   AND lo.orderdate=d.dateid
   AND c.region='A'
   AND s.region='A'
   AND d.year>=1992 and d.year<=1997
GROUP BY c.nation, s.nation, d.year
ORDER BY d.year asc, revenue desc;"

In the foregoing query statement, lineorder is an order line table (lo for short), customer is a customer information table (c for short), supplier is a supplier information table (s for short), and date is a date table (d for short). The fact table is the order line table lo. The dimension tables include the customer information table c, the supplier information table s, and the date table d. These dimension tables are used to store dimension information of factual data in the fact table lo. A customer key custkey column, a supplier key suppkey column, and a date identifier dateid column are join keys, a lo.revenue column is a measure key, and a c.nation column, an s.nation column, and a d.year column are group keys. The data query request indicates to query, based on custkey, suppkey, and dateid, a total order revenue that meets a specified condition from the fact table lo and the plurality of dimension tables c, s, and d, where the specified condition means that region in the dimension table c='A', region in the dimension table s='A', and year in the dimension table d ranges from 1992 to 1997, query results are grouped based on the group keys, years are sorted in ascending order, and revenues are sorted in descending order.

**402: The acceleration apparatus generates a vector dictionary of each dimension table based on the query vector and a vector corresponding to the at least one dimension table, where the vector dictionary of the dimension table includes a join key value that is of the join key and that is related to the query vector in the dimension table.**

In this embodiment of this application, the at least one dimension table may be stored in the acceleration apparatus. In this way, the acceleration apparatus does not need to obtain the dimension table from the host. This improves data query efficiency. Certainly, the dimension table may alternatively be stored in a host memory, and is obtained by the acceleration apparatus from the host, to save storage space of the acceleration apparatus. Alternatively, when there are a plurality of dimension tables, a part of the dimension tables may be stored in the acceleration apparatus, and the other part of the dimension tables may be stored in the host memory. This is not limited in this application.

For example, in this step, for any dimension table (referred to as a first dimension table below), the acceleration apparatus generates a vector dictionary of the dimension table based on the query vector and a vector (which may also be referred to as a dimension vector for short) corresponding to the dimension table. The following uses the first dimension table as an example, and this step includes the following step A1 and step A2.

Step A1: Determine, based on first dimension information indicated by the query vector, a first join key value related to the first dimension information from the first dimension table in which the first dimension information is located.

The acceleration apparatus traverses, based on the first dimension information and a join key column of the first dimension table, the first dimension table in which the first dimension information is located, to determine the first join key value that satisfies the first dimension information.

Step A2: Generate a vector dictionary of the first dimension table based on the first join key value.

The acceleration apparatus generates the vector dictionary of the first dimension table based on the first join key value and a dimension table identifier that is of the first join key value and that is in the first dimension table. The dimension table identifier is an object identifier (object identifier, OID), and uniquely identifies a specific row in the dimension table.

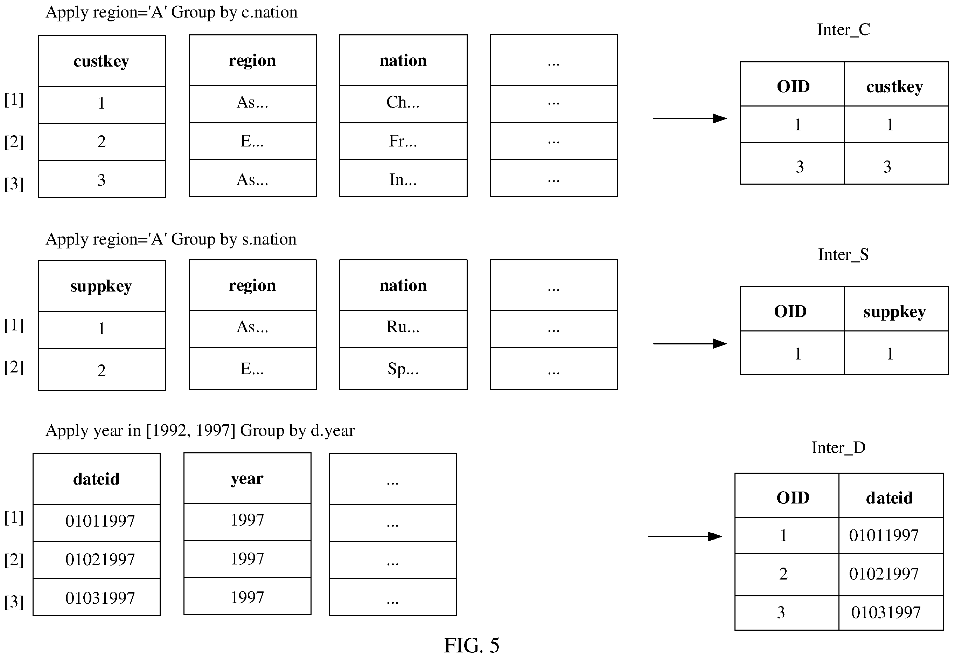

For example, FIG. 5 is a diagram of generating a vector dictionary according to an embodiment of this application. With reference to the SQL example in step 401, an example in which the first dimension information is c.region='A' is used. The first dimension table is the customer information table c, and the join key column corresponding to the first dimension table is the custkey column. Based on this, the acceleration apparatus traverses the first dimension table, to determine the first join key values, namely, custkey "1" and custkey "3" in the first dimension table when c.region='A' is satisfied. The vector dictionary of the first dimension table, namely, "Inter_C", is generated with reference to dimension table OIDs corresponding to the two first join key values. This process may also be understood as a process of compressing the first dimension table. In addition, FIG. 5 further shows a process of generating a vector dictionary for the supplier information table s and for the date table d. A principle is the same as that for the customer information table c. A vector dictionary of the supplier information table s is "Inter_S", and a vector dictionary of the date table d is "Inter_D". Details are not described herein again.

In some embodiments, the acceleration apparatus stores the vector dictionary of each dimension table in the acceleration apparatus, for example, in a storage unit ASPM of the acceleration apparatus, to facilitate subsequent quick access and improve data query efficiency.

**403: The acceleration apparatus traverses the at least one dimension table based on the at least one foreign key of the fact table, the primary key of the at least one dimension table, and the vector dictionary of each dimension table, to generate a vector index, where the vector index includes a fact table identifier in the fact table for the join key value.**

In this embodiment of this application, the fact table identifier is an object identifier (OID), and uniquely identifies a specific row in the fact table. Because the vector dictionary of each dimension table is obtained through the foregoing step 402, in this step, the dimension table and the fact table may be joined based on the vector dictionary of each dimension table and an association relationship between the dimension table and the fact table, to construct the vector index.

In some embodiments, the acceleration apparatus stores the vector index in the acceleration apparatus. Because a size of the vector index is small, not too much storage space is occupied. In addition, the acceleration apparatus may subsequently query the fact table based on the vector index stored locally in the acceleration apparatus, so that data query efficiency can be effectively improved.

For example, this step includes the following steps B1 and B2.

Step B1: Generate a join table of each dimension table based on the at least one foreign key of the fact table, the primary key of the at least one dimension table, and the vector dictionary of each dimension table, where the join table of the dimension table includes the join key value in the dimension table and the fact table identifier in the fact table for the join key value.

For any dimension table (referred to as the first dimension table below), step B1 includes the following steps.

Step B11: Traverse the first dimension table based on the vector dictionary of the first dimension table and a first primary key of the first dimension table, to determine a first primary key value corresponding to the first join key value in the first dimension table, where the first join key value is a join key value determined from the first dimension table based on the first dimension information indicated by the query vector.

The acceleration apparatus traverses the first dimension table based on the first join key value in the vector dictionary of the first dimension table and the first primary key of the first dimension table, to determine the first primary key value corresponding to the first join key value from a primary key column of the first dimension table. For the first join key value, refer to step 402. Details are not described herein again.

Step B12: Determine a first fact table identifier in the fact table for the first join key value based on the first primary key value and a first foreign key, of the fact table, that is associated with the first primary key value.

The acceleration apparatus obtains, based on the first primary key value and the first foreign key of the fact table, corresponding data in the fact table for matching, and determines the first fact table identifier of the first join key value in the fact table.

Step B13: Generate a join table of the first dimension table based on the first join key value and the first fact table identifier in the fact table for the first join key value.

Step B2: Generate the vector index based on a same fact table identifier in the join table of each dimension table.

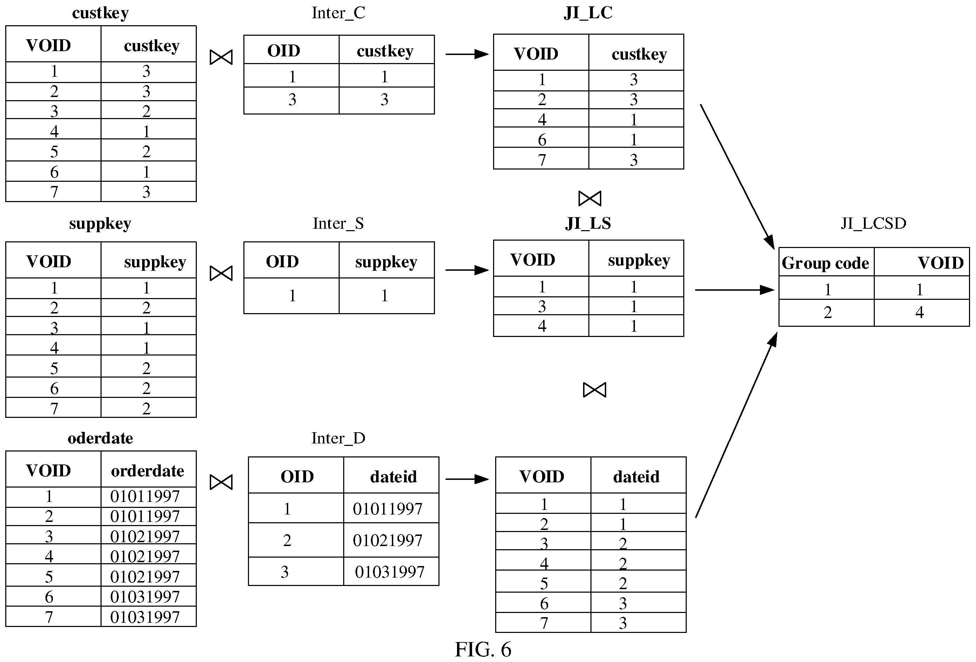

For example, for step B1 and step B2, refer to FIG. 6. FIG. 6 is a diagram of generating a vector index according to an embodiment of this application. As shown in FIG. 6, with reference to the SQL example in step 401, an example in which the first dimension table is the customer information table c is used. The join key column corresponding to the first dimension table is the custkey column, the vector dictionary of the first dimension table is "Inter_C", and the primary key column of the first dimension table is the custkey column. The acceleration apparatus traverses the first dimension table, to determine that first primary key values corresponding to the first join key values custkey "1" and custkey "3" are 3, 3, 1, 1, and 3. Then, the acceleration apparatus determines, based on the first primary key values and the first foreign key (namely, the custkey column) of the fact table, first fact table identifiers of the first join key values in the fact table, namely, 1, 2, 4, 6, and 7. The join table of the first dimension table, namely, "JI_LC" (short for Join-lineorder-customer) is generated based on the first join key values (namely, the first primary key values in this example) 3, 3, 1, 1, 3 and the first fact table identifiers 1, 2, 4, 6, and 7. In addition, FIG. 6 further shows a process of generating join tables for the supplier information table s and the date table d. A principle is the same as that for the customer information table c. The join table of the supplier information table s is "JI_LS" (short for Join-lineorder-supplier), and the join table of the date table d is "JI_LD" (short for Join-lineorder-date). Details are not described herein again. In the figure, "VOID" is short for Virtual-OID, which indicates the fact table identifier.

Still refer to FIG. 6. After the join table of each dimension table is obtained, the vector index, namely, "JI_LCSD" (short for Join-lineorder-customer-supplier-date), is generated based on the same fact table identifier in the join table of each dimension table. Because FIG. 6 is an example based on a star schema benchmark, the vector index generated herein meets a star join condition. It should be understood that the data query method provided in this application is further applicable to another join architecture, for example, a snowflake join architecture (which may be understood as a complex form of a star join architecture). This is not limited in this application.

In addition, in some embodiments, when the data query request indicates to query data from the fact table and the at least one dimension table based on the join key and the group key, the acceleration apparatus further performs the following steps: generating a group code based on the group key, and mapping the group code to a subscript of a one-dimensional array corresponding to the group key. In other words, with reference to the vector index "JI_LCSD" in FIG. 6, in the vector index, values 1 and 4 in a second column indicate that row 1 and row 4 in row 1 to row 7 in the fact table meet a condition, values of a first column are group codes, row 1 is in a first group, and row 4 is in a second group.

**404: The acceleration apparatus queries the fact table based on the vector index, to obtain a data query result.**

In this embodiment of this application, the acceleration apparatus obtains the factual data in the fact table from the host, and queries, based on the vector index, a column in which the join key is located in the fact table, to obtain the data query result. In some embodiments, when the data query request indicates to query data from the fact table and the at least one dimension table based on the join key and the measure key, the acceleration apparatus queries, based on the vector index, the column in which the join key is located and a column in which the measure key is located in the fact table, to obtain the data query result.

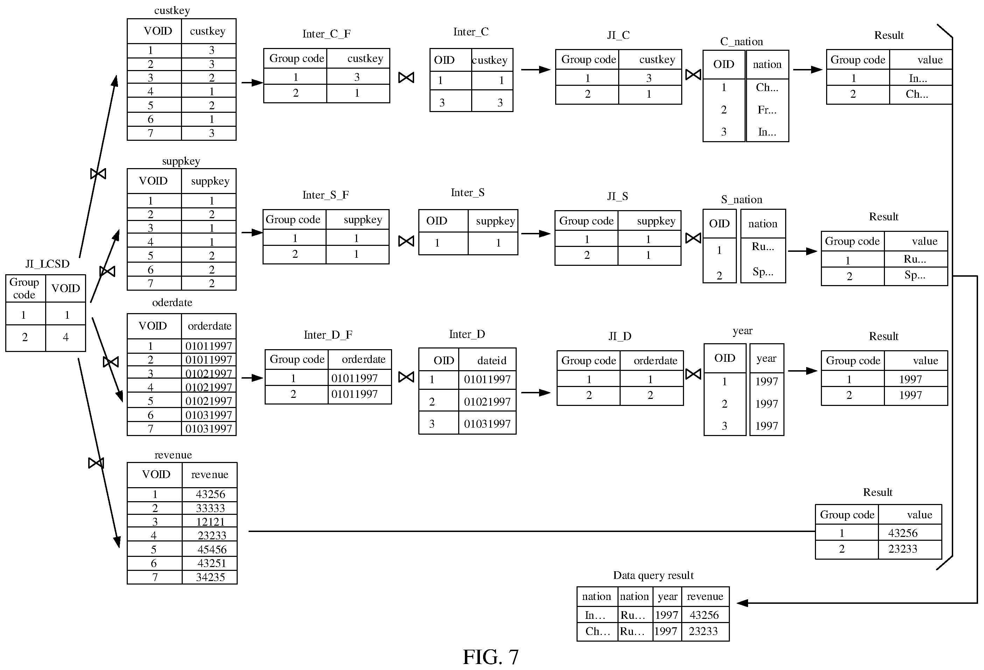

FIG. 7 is a diagram of querying a fact table based on a vector index according to an embodiment of this application. As shown in FIG. 7, with reference to the SQL example in step 401, the acceleration apparatus queries, based on the vector index "JI_LCSD", columns in which the join keys custkey, suppkey, and orderdate are located in the fact table, to obtain intermediate query results "Inter_C_F" (C_F is short for customer-fact table), "Inter_S_F" (S_F is short for supplier-fact table), and "Inter_D_F". (D_F is short for date-fact table), and combines the intermediate query results with the vector dictionary of each dimension table, to extract dimension table output columns. For example, after the intermediate query result "Inter_C_F" is obtained, nation of customer further needs to be queried. In addition, in the SQL example in step 401, the data query request specifies the lo.revenue column as the measure key. Therefore, the acceleration apparatus queries the lo.revenue column in the fact table based on the vector index, and extracts a corresponding key value, to obtain measure data "Inter_R". An output column of each dimension table and measure data extracted from a fact table measure column are combined, to obtain the data query result.

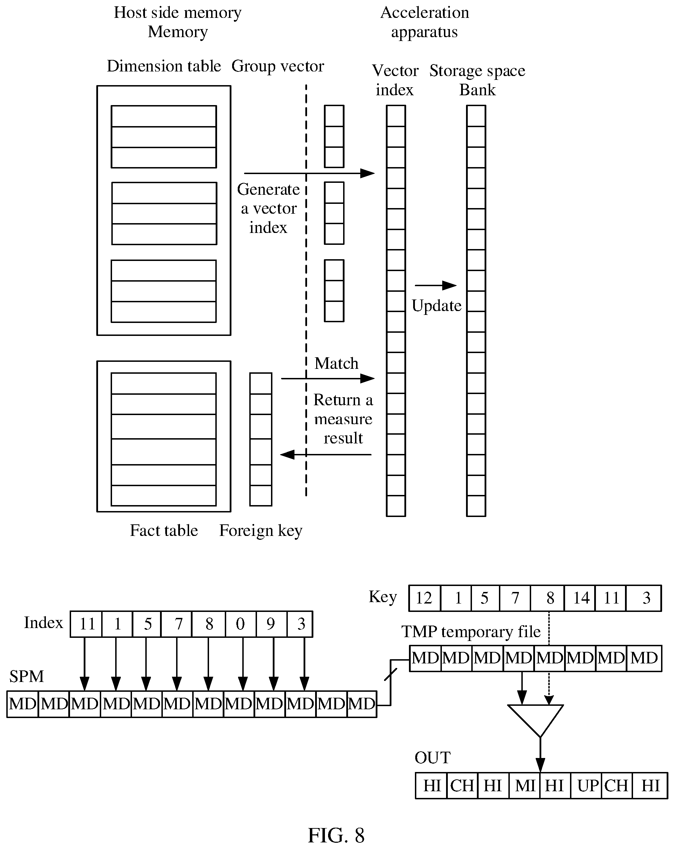

Refer to FIG. 8. The following describes the data query method shown in step 401 to step 404 by using interaction between a host and an acceleration apparatus as an example. FIG. 8 is a diagram of another data query method according to an embodiment of this application. As shown in FIG. 8, a left side is a host side, and a right side is the acceleration apparatus. For example, the data query method includes the following several steps.
1. An acceleration apparatus obtains a query vector of a data query request, generates a vector dictionary of each dimension table based on the dimension table in a memory of a host side, compresses GROUP-BY and WHERE data (refer to the SQL shown in step 401), and stores the vector dictionary of each dimension table in a storage unit of the acceleration apparatus.
2. The acceleration apparatus traverses, based on the query vector and a vector corresponding to each dimension table, each dimension table, and obtains, with reference to an association relationship between the dimension table and a fact table, corresponding factual data in the fact table for matching, to generate a vector index.
3. The acceleration apparatus moves fact table data from a host in batches, performs fact table calculation based on measure data, extracts a dimension table output column from each dimension table, and combines the dimension table output column with an output column extracted from a fact table measure column into a data query result.

It should be noted that, due to multi-table join, no output is performed if any condition is not met. Therefore, data that is already accessed and does not meet a join condition is not accessed again.

4. The acceleration apparatus returns the data query result to the host.

In some embodiments, in a scenario in which a data query result obtained after join needs to be further aggregated (ADD/COUNT/AVG), the acceleration apparatus may implement vectorized execution by using a VADD instruction, and accumulate the result to storage space corresponding to a bank, to obtain a further aggregated data query result, and return the further aggregated data query result to the host side. For example, an SPM in the figure is a sub-storage unit of the storage unit ASPM, and a plurality of vector indexes may be sequentially stored, to save storage space. For example, actual data is obtained from the SPM, and is directly written after an index is constructed. A key (key) is stored in the SPM, and a value (value) is stored in the bank.

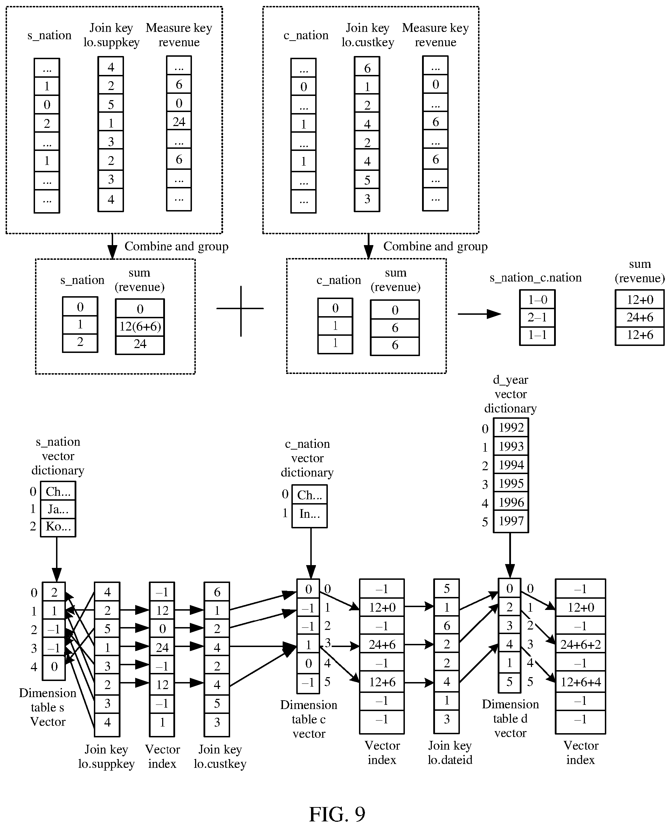

In addition, for the foregoing process, refer to FIG. 9. FIG. 9 is a diagram of another data query method according to an embodiment of this application. As shown in FIG. 9, the SQL in step 401 is still used as an example for description with reference to sum (lo.revenue) as revenue. Based on s_nation related to the SQL, the fact table lineorder is combined with the dimension table supplier by using the join key suppkey, to determine that revenues corresponding to s_nation of 1, 0, 2, and 1 are 6, 0, 24, and 6, respectively. Grouping is performed based on the group key s_nation to obtain a vector dictionary corresponding to the dimension table supplier. Similarly, based on c_nation related to the SQL, the fact table lineorder is combined with the dimension table customer by using the join key custkey, to determine that revenues corresponding to c_nation of 0, 1 and 1 are 0, 6, and 6, respectively. Grouping is performed based on the group key c_nation to obtain a vector dictionary corresponding to the dimension table customer. Then, the foregoing two vector dictionaries are combined based on a join condition indicated by the query vector, to obtain a grouping result, as shown in the figure. Similar operations are performed on the dimension table date. Finally, the three vector dictionaries related to the SQL statement are combined, and corresponding data is found from the fact table for summing up. It should be understood that the figure is merely an example for description, and some data is not shown. For a principle of the figure, refer to the foregoing method embodiments. Details are not described herein again.

It can be learned from the foregoing descriptions of FIG. 4 to FIG. 9 that an embodiment of this application provides a data query method, applied to an acceleration apparatus of a compute device, and the method includes: performing vectorized execution on a data query request, and generating a vector dictionary and a vector index based on a fact table, a dimension table, and a join key that are indicated by the data query request, to implement multi-table join query. In this way, because sizes of the vector dictionary and the vector index are small, not too much storage space is occupied. In addition, an entire process is performed by a hardware acceleration apparatus, so that computational power of a processor in the compute device is offloaded. This improves overall query performance.

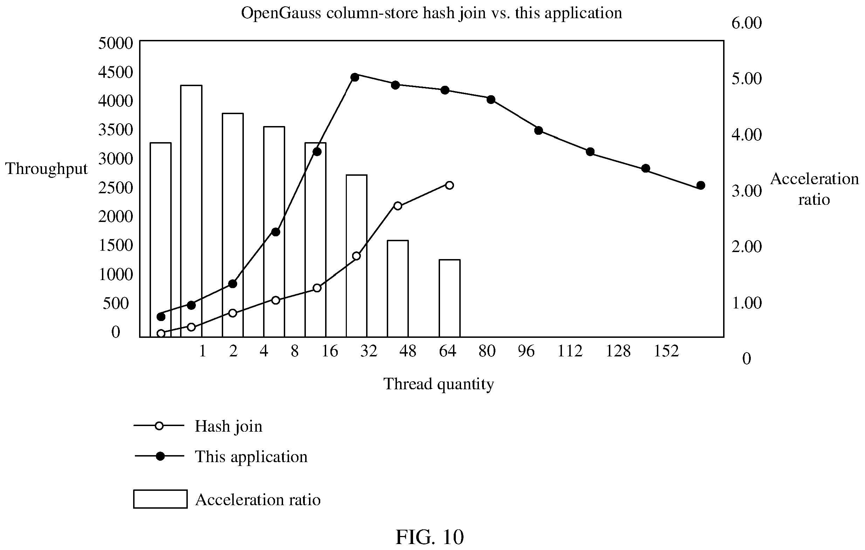

In addition, based on the foregoing descriptions, it can be learned that the technical solutions provided in this application are oriented to acceleration scenarios such as general-purpose database and big data queries. Compared with a hash join algorithm, the data query method provided in this application can effectively improve data query efficiency. FIG. 10 is a diagram of experimental effect comparison according to an embodiment of this application. As shown in FIG. 10, an openGauss column-store hash join algorithm is divided into three phases for timing: build, probe, and get_batch. Correspondingly, in the method provided in this application, a vector join time is divided into a vector index build (build) time and a vector join time. It can be learned that, in the method provided in this application, an average improvement of 3.x is achieved for a star join statement of an SSB Benchmark, and overall data processing throughput is significantly improved. For a star join (Star Join), a foreign key vector is calculated, so that a vector array is directly accessed during join to complete an operation such as join filtering. For vector group (Vector Group), a group aggregation calculation method based on a multi-dimensional array is used to map a plurality of group codes that are output and recorded in a star join process of a query to subscripts of dimensions of a corresponding multi-dimensional array, and convert the subscripts into one-dimensional array subscripts for aggregation calculation.

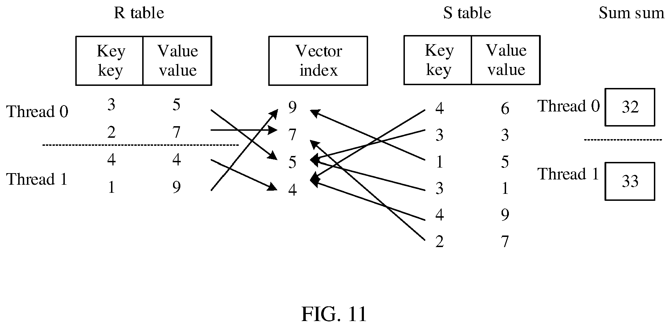

In addition, a process of constructing the vector dictionary, the vector index, and the like in this application is smaller and faster than hash join. In addition, a feature of a vector index being smaller imposes a lower requirement on a size of a CPU cache, so that a cache (cache) loss caused when a vector index is run on some specific CPUs (with small caches) can be avoided. FIG. 11 is a diagram of another data query method according to an embodiment of this application. A query statement "select sum(R.payload+S.payload) from R, S where R.key=S.key" is used as an example. A vector table with a length equal to that of the R table is created according to the method provided in this application, and a load is mapped to a unique position in a vector index table by using a vector index. In this way, when searching is performed based on the S table, a corresponding value can be directly obtained for direct calculation. Compared with hash join, contention for parallel locks is minimized. In addition, hash value calculation and hash table querying are eliminated, and a CPU cycle in a probe phase is reduced.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first dimension table may be referred to as a second dimension table, and similarly, a second dimension table may be referred to as a first dimension table. Both the first dimension table and the second dimension table may be dimension tables, and in some cases, may be separate and different dimension tables.

The term "at least one" in this application means one or more, and the term "a plurality of" in this application means two or more. For example, a plurality of dimension tables mean two or more dimension tables.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, all or a part of embodiments may be implemented in a form of program structure information. The program structure information includes one or more program instructions. When the program instructions are loaded and executed on a compute device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A data query method, applied to an acceleration apparatus of a compute device, wherein the method comprises:
obtaining a query vector of a data query request, wherein the data query request indicates to query data from a fact table and at least one dimension table based on a join key, at least one foreign key of the fact table is associated with a primary key of the at least one dimension table, and the at least one dimension table is used to store dimension information of factual data in the fact table;
generating a vector dictionary of each dimension table based on the query vector and a vector corresponding to the at least one dimension table, wherein the vector dictionary of the dimension table comprises a join key value that is of the join key and that is related to the query vector in the dimension table;
traversing the at least one dimension table based on the at least one foreign key of the fact table, the primary key of the at least one dimension table, and the vector dictionary of each dimension table, to generate a vector index, wherein the vector index comprises a fact table identifier in the fact table for the join key value; and
querying the fact table based on the vector index, to obtain a data query result.

2. The method according to claim 1, wherein the at least one dimension table is stored in the acceleration apparatus.

3. The method according to claim 1 or 2, wherein the method further comprises at least one of the following:
storing the vector dictionary of each dimension table in the acceleration apparatus; or
storing the vector index in the acceleration apparatus.

4. The method according to any one of claims 1 to 3, wherein generating the vector dictionary of each dimension table based on the query vector and the vector corresponding to the at least one dimension table comprises:
determining, based on first dimension information indicated by the query vector, a first join key value related to the first dimension information from a first dimension table in which the first dimension information is located; and
generating a vector dictionary of the first dimension table based on the first join key value.

5. The method according to any one of claims 1 to 4, wherein traversing the at least one dimension table based on the at least one foreign key of the fact table, the primary key of the at least one dimension table, and the vector dictionary of each dimension table, to generate the vector index comprises:
generating a join table of each dimension table based on the at least one foreign key of the fact table, the primary key of the at least one dimension table, and the vector dictionary of each dimension table, wherein the join table of the dimension table comprises the join key value in the dimension table and the fact table identifier in the fact table for the join key value; and
generating the vector index based on a same fact table identifier in the join table of each dimension table.

6. The method according to claim 5, wherein generating the join table of each dimension table based on the at least one foreign key of the fact table, the primary key of the at least one dimension table, and the vector dictionary of each dimension table comprises:
traversing the first dimension table based on the vector dictionary of the first dimension table and a first primary key of the first dimension table, to determine a first primary key value corresponding to the first join key value in the first dimension table, wherein the first join key value is a join key value determined from the first dimension table based on the first dimension information indicated by the query vector;
determining a first fact table identifier in the fact table for the first join key value based on the first primary key value and a first foreign key, of the fact table, that is associated with the first primary key; and
generating a join table of the first dimension table based on the first join key value and the first fact table identifier in the fact table for the first join key value.

7. The method according to any one of claims 1 to 6, wherein querying the fact table based on the vector index, to obtain the data query result comprises:
querying, based on the vector index, a column in which the join key is located in the fact table, to obtain the data query result.

8. The method according to any one of claims 1 to 6, wherein the data query request indicates to query data from the fact table and the at least one dimension table based on the join key and a measure key; and querying the fact table based on the vector index, to obtain the data query result comprises:
querying, based on the vector index, a column in which the join key is located and a column in which the measure key is located in the fact table, to obtain the data query result.

9. The method according to any one of claims 1 to 8, wherein the data query request indicates to query data from the fact table and the at least one dimension table based on the join key and a group key, and the method further comprises:
generating a group code based on the group key, and mapping the group code to a subscript of a one-dimensional array corresponding to the group key in the data query result.

10. The method according to any one of claims 1 to 9, wherein the acceleration apparatus is at least one of a system on chip SOC, a field-programmable gate array FPGA, a graphics processing unit GPU, an application-specific integrated circuit ASIC, an artificial intelligence AI chip, or a data processing unit DPU.

11. An acceleration apparatus, configured in a compute device, wherein the acceleration apparatus comprises a processing unit and a storage unit, the processing unit is configured to perform the data query method according to any one of claims 1 to 10, and the storage unit is configured to provide storage space for the acceleration apparatus.

12. A compute device, wherein the compute device comprises a host and an acceleration apparatus, the host is configured to send a data query request to the acceleration apparatus, and the acceleration apparatus is configured to receive the data query request and implement the data query method according to any one of claims 1 to 10.

13. A computer-readable storage medium, wherein the computer-readable storage medium is configured to store at least one segment of program code, and the at least one segment of program code is used to perform the data query method according to any one of claims 1 to 10.

14. A computer program product, wherein when the computer program product is run on an acceleration apparatus of a compute device, the acceleration apparatus is enabled to perform the data query method according to any one of claims 1 to 10.
